# EUROPÄISCHE PATENTSCHRIFT

(11) **EP 3 734 232 B1**
(45) Veröffentlichungstag und Bekanntmachung des Hinweises auf die Patenterteilung: **20.09.2023**
(21) Anmeldenummer: 20171982.0
(22) Anmeldetag: 29.04.2020
(51) Int. Cl.: G01D 5/244, G01D 18/00, H02K 11/21, H02K 15/00

(54) **VERFAHREN ZUM BESTIMMEN EINES OFFSETS EINES WINKELLAGEGEBERS AN EINER ROTORWELLE EINER ELEKTRISCHEN MASCHINE**
METHOD FOR DETERMINING AN OFFSET OF AN ANGULAR POSITION SENSOR ON A ROTOR SHAFT OF AN ELECTRIC MACHINE
PROCÉDÉ DE DÉTERMINATION D'UN DÉCALAGE D'UN CAPTEUR DE POSITION ANGULAIRE SUR UN ARBRE DE ROTOR D'UNE MACHINE ÉLECTRIQUE

(30) Priorität: 30.04.2019 DE 102019111146
(43) Veröffentlichungstag der Anmeldung: 04.11.2020
(73) Patentinhaber: Valeo eAutomotive Germany GmbH, 91056 Erlangen (DE)
(72) Erfinder: SAHHARY, Bassel, 91058 Erlangen (DE); WALTER, Andreas, 90411 Nürnberg (DE)
(74) Vertreter: Valeo Powertrain Systems

(56) Entgegenhaltungen:
- EP-A1- 2 985 904
- WO-A1-2017/153065
- DE-A1-102013 221 767
- PARK R H: "Two-reaction theory of synchronous machines generalized method of analysis-part I", TRANSACTIONS OF THE AMERICAN INSTITUTE OF ELECTRICAL ENGINEERS, AMERICAN INSTITUTE OF ELECTRICAL ENGINEERS, NEW YORK, NY, US, Bd. 48, Nr. 3, 1. Juli 1929 (1929-07-01), Seiten 716-727, XP011293838, ISSN: 0096-3860

## Beschreibung

Die Erfindung betrifft ein Verfahren zum Bestimmen eines Offsets eines Winkellagegebers an einer Rotorwelle einer elektrischen Maschine.

### Stand der Technik

Elektromotoren als elektrische Maschinen sind allgemein bekannt und finden zunehmend Anwendung für den Antrieb von Fahrzeugen. Ein Elektromotor besteht aus einem Stator und einem Rotor.

Der Stator umfasst eine Vielzahl von Slots, in denen die Windungen geführt werden. Der Rotor befindet sich im Stator und ist mit einer Rotorwelle verbunden. Für die Steuerung der elektrischen Maschine ist es nötig die genaue Winkellage des Rotors im Stator zu kennen. Mittels eines sogenannten Winkellagegebers kann der Lagewinkel fortlaufend gemessen werden. Der Winkellagegeber kann beispielsweise am Stator oder einem Lagerschild befestigt werden, muss jedoch einen Abstand zum Rotor aufweisen.

Aus der EP 2 985 904 A1 ist ein Verfahren zur Diagnose des Offsets eines Winkellagegebers bekannt, bei dem einem Motor Steuersignale für einen Prüfanregungsstrom bereitgestellt werden.

Aus der WO 2017/153065 A1 ist ein Verfahren zum Bestimmen eines Winkelfehlers zwischen einem mittels eines Winkelmesssystems ermittelten Drehwinkelwert und einem Referenzwert bekannt.

Aus der DE 10 2013 221767 A1 ist ein Verfahren zum Betreiben einer rotierenden elektrischen Maschine bekannt, bei dem Winkeloffsets bestimmt werden.

Der Artikel von R. H. Park "Two-Reaction Theory of Synchronous Machines - Generalized Method of Analysis - Part I" in: Transactions of the American Institute of Electrical Engineers, American Institute of Electrical Engineers, New York, Bd. 48, Nr. 1, Seiten 716-727, XP011293838, enthält technologischen Hintergrund.

Aus der DE 10 2011 087 396 A1 ist ein Verfahren zur Montage eines Winkellagegebers an einer Rotorwelle eines Elektromotors bekannt. Da die physikalische Lage nie absolut genau ist, muss die Abweichung von der eingebauten zur erwünschten Lage bei jeder elektrischen Maschine bestimmt werden. Diese fertigungsbedingte Lageabweichung wird auch Offset genannt. In dem aus DE `396 bekannten Verfahren wird nach dem Einbau des Winkellagegebers die genaue Lage, also das Offset, bezüglich des Rotors und des am Stator befestigten Winkellagegebers auf einem Motorprüfstand bestimmt.

### Aufgabe und Lösung

Aufgabe der vorliegenden Erfindung ist es, ein Verfahren zur Bestimmung des Offsets des Winkellagegebers bereitzustellen, das einfach und zeitsparend ist.

Diese Aufgabe wird erfindungsgemäß durch ein Verfahren gemäß Anspruch 1 und durch ein System gemäß Anspruch 6 gelöst. Vorteilhafte Ausgestaltungen sind Gegenstand der abhängigen Ansprüche.

Erfindungsgemäß umfasst das Verfahren zum Bestimmen eines Offsets eines Winkellagegebers, der einem Rotor einer elektrischen Maschine zugeordnet ist, wobei ein Referenzoffset eines Referenzwinkellagegebers einer elektrischen Referenzmaschine bei einer Referenzdrehzahl und einem Referenzstrom mit einem Referenzstromwinkel und einem Referenzbetrag bekannt ist, die folgenden Schritte, Einprägen eines Stroms mit dem Referenzbetrag, Einstellen eines Stromwinkels des Stroms zum Erreichen der Referenzdrehzahl, Vergleichen des Stromwinkels mit dem Referenzstromwinkel und dem Referenzoffset, Ermitteln des Offsets aus diesem Vergleich.

Der Referenzstrom mit Referenzstromwinkel und Referenzbetrag wird bei einer elektrischen Referenzmaschine bei einer Referenzdrehzahl ermittelt. Bei dieser Referenzmaschine wurde im Voraus das fertigungsbedingte Referenzoffset des Winkellagegebers auf einem Motorprüfstand mit einem bekannten Verfahren bestimmt. Durch das bekannte Referenzoffset stellt die Regelung nun einen Referenzstrom mit einem optimalen Referenzstromwinkel ein. Die Strombestandteile q-Strom und d-Strom schließen in der komplexen Ebene den Stromwinkel ein, wobei die Länge eines Stromzeigers den Referenzbetrag des Referenzstroms darstellt.

Bei einem unbekannten Offset wäre der Stromwinkel nicht optimal und würde zu einem Verschieben von d- zu q-Strom führen.

Die Folge wäre, zum Beispiel beim Betrieb einer elektrischen Maschine als Synchronmaschine, ein erhöhter Energieverbrauch oder im Extremfall sogar eine ungewollte Drehrichtungsänderung.

Durch die Referenzmaschine mit einem Winkellagegeber mit bekanntem Referenzoffset ist hingegen ein Referenzstromwinkel bei einer Referenzdrehzahl und einem Referenzbetrag des Stroms bekannt.

Bei einer elektrischen Maschine mit ähnlichen elektrischen Eigenschaften wie die der Referenzmaschine, also beispielsweise gleiches Wicklungsschema, gleiche Anzahl an Statornuten, ähnlicher Rotor, müsste sich bei gleicher fertigungsbedingter Abweichung der Einbaulage des Winkellagegebers der gleiche Stromwinkel wie bei der Referenzmaschine einstellen, um die geforderte Referenzdrehzahl unter optimaler Energieausnutzung zu erreichen.

Die fertigungsbedingte Abweichung beim Einbau des Winkellagegebers und das daraus resultierende Offset des Winkellagegebers sind motorindividuell und somit unterschiedlich im Vergleich zur Referenzmaschine. Daher muss das Offset für jede elektrische Maschine einzeln bestimmt werden.

Da der optimale Referenzstromwinkel mit Referenzbetrag bei der Referenzdrehzahl und dem Referenzoffset bekannt sind und sich bei einer ähnlichen elektrischen Maschine der gleiche, optimale Stromwinkel mit Referenzbetrag und dem Offset bei der Referenzdrehzahl einstellen müsste, liegt der Unterschied zwischen Referenzstromwinkel und Stromwinkel im Wesentlichen an dem durch die fertigungsbedingte Abweichung entstandenen Offset des Winkellagegebers. Im Wesentlichen bedeutet hier, dass beispielsweise unterschiedliche elektrische Widerstände in den Windungen der verschiedenen elektrischen Maschinen einen zu vernachlässigbaren Einfluss auf den Stromwinkel haben.

Mit anderen Worten, der Stromwinkel der zu prüfenden elektrischen Maschine wäre identisch zum Referenzstromwinkel der elektrischen Referenzmaschine, wenn beide Winkellagegeber das gleiche Offset hätten. Die Abweichung zwischen dem Referenzstromwinkel und dem Stromwinkel entspricht der Abweichung des Offsets der zu messenden elektrischen Maschine zum Referenzoffset der Referenzmaschine. Da das Referenzoffset bekannt ist, lässt sich das Offset der zu messenden elektrischen Maschine bestimmen.

Es ist somit eine Ermittlung des Offsets für eine Vielzahl von elektrischen Maschinen möglich, ohne genaue Vermessung des Offsets des Winkellagegebers jeder einzelnen elektrischen Maschine auf einem Motorprüfstand.

Eine Serienproduktion von elektrischen Maschinen ist somit kostengünstiger und zeitsparender möglich.

Bevorzugt kann das Offset bei zwei unterschiedlichen Referenzdrehzahlen bestimmt und daraus ein Mittelwert gebildet werden.

Dies ermöglicht eine genauere Ermittlung des Offsets, da Fehler bei den einzelnen Messungen weniger stark berücksichtigt werden.

Eine weitere Verbesserung der Ermittlung des Offsets kann durch Bilden von Mittelwerten oder gewichteten Durchschnittswerten aus den Werten bei den Referenzdrehzahlen erfolgen.

In einer weiteren bevorzugten Ausgestaltung der Erfindung können die Referenzdrehzahlen betragsmäßig gleich groß sein aber in unterschiedlichen Drehrichtungen liegen.

Bei genau entgegengesetzten Drehzahlen ist von einem Stromwinkel in genau entgegengesetzter Richtung auszugehen. Hier wird das Offset besonders deutlich sichtbar.

Weiter bevorzugt kann die Referenzdrehzahl im Bereich zwischen einem Drittel und zwei Dritteln einer Motornenndrehzahl liegen.

In dem Betriebsbereich ist der fließende Strom ausreichend groß und die Verluste durch Lager und Erwärmung jedoch noch klein genug, um einen optimal Stromwinkel messen zu können.

In einer weiteren Ausgestaltung der Erfindung kann das Verfahren als End of Line Test einer Serienproduktion durchführbar sein.

Dabei kann man von einer beliebigen elektrischen Maschine, einer zu prüfenden Serie ausgehen. Die folgenden elektrischen Maschinen müssen immer auf die vorgegebene Referenzdrehzahl geregelt werden. Aus den abweichenden Stromwinkeln wird somit das jeweilige Offset des Winkellagegebers bestimmt.

Das bestimmte Offset des Winkellagegebers der elektrischen Maschine ist vom angeschlossenen Inverter im Wesentlichen unabhängig, da das fertigungsbedingte Offset des Winkellagegebers immer größer als ein durch die Signallaufzeit bedingtes Offset des Inverters ist.

Selbst ein Wechsel des Inverters zwischen der Bestimmung des Referenzstromwinkels der Referenzmaschine und des Offsets des Winkellagegebers der elektrischen Maschine hat nahezu keinen Einfluss auf den Stromwinkel und das Ermitteln des Offsets des Winkellagegebers.

### Figurenbeschreibung

Figur 1 zeigt eine Anordnung einer elektrischen Maschine mit einem Inverter und einer Steuerung.
Figur 2 zeigt ein Flussdiagramm der Erfindung.
Figur 3 zeigt ein Zeigerdiagramm mit einem eingeprägten Strom in der komplexen Ebene.
Figur 4 zeigt ein Fahrzeug mit einer elektrischen Maschine und einen Winkellagegeber.

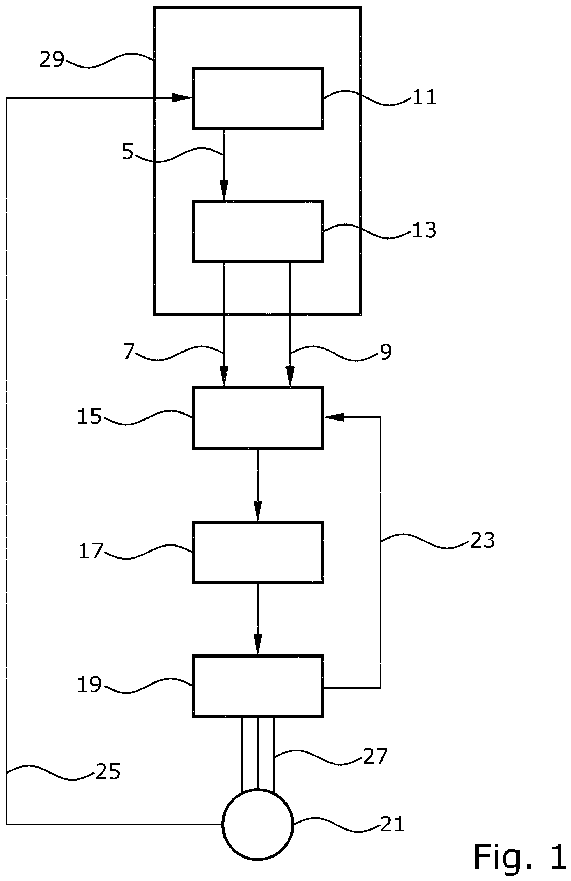

In Figur 1 ist schematisch eine elektrische Maschine 21, insbesondere ein Elektromotor, dargestellt. Über drei Phasen 27 ist die elektrische Maschine 21 an einen Inverter 19 angeschlossen, der die elektrische Maschine 21 mit Wechselstrom aus einer - beispielsweise Batterie - Gleichstromquelle (nicht dargestellt) versorgt.

Ein Pulsweitenmodulator 17 schaltet die Schaltelemente im Inverter 19, um die elektrische Maschine mit einer Wechselspannung aus einer Gleichspannungsquelle zu versorgen. Der Pulsweitenmodulator 17 bekommt von einem Stromcontroller 15 vorgegeben, welches Tastverhältnis der Inverter 19 beim Wechselrichten des Stroms einstellen soll. Vom Inverter 19 erhält der Stromcontroller 15 eine Rückmeldung 23 über den tatsächlich in die elektrische Maschine eingespeisten Strom der drei Phasen 27.

Der Stromcontroller 15 erhält von einem Stromvorgeber 13 im Drehzahlregler 29 die Vorgaben für den einzuprägenden Strom mit Strombetrag und Stromwinkel, also Werte für q- 9 und d-Strom 7. Der Stromvorgeber 13 bekommt dafür von der adaptiven Drehzahlsteuerung 11 eine dafür nötigen Stromwinkel 5 vorgegeben, die die elektrische Maschine 21 erreichen soll. Von der elektrischen Maschine 21 erhält die adaptiven Drehzahlsteuerung 11 wiederum Rückmeldung 25 über die tatsächlich anliegende Drehzahl an der elektrischen Maschine 21 und kann ggf. die Drehzahl mittels eines Eingriffs des Stromvorgebers korrigieren.

Da der Drehzahlregler 29 mit seinen Bestandteilen nur für das Bestimmen des Offsets nötig ist, kann beim Betrieb der elektrischen Maschine nach dem Bestimmen des Offsets, beispielsweise in einem Fahrzeug, darauf verzichtet werden.

Mittels des in Figur 1 gezeigten Aufbaus kann das Offset bei einem bekannten Referenzoffset der Referenzmaschine an baugleichen elektrischen Serienmaschinen bestimmt werden.

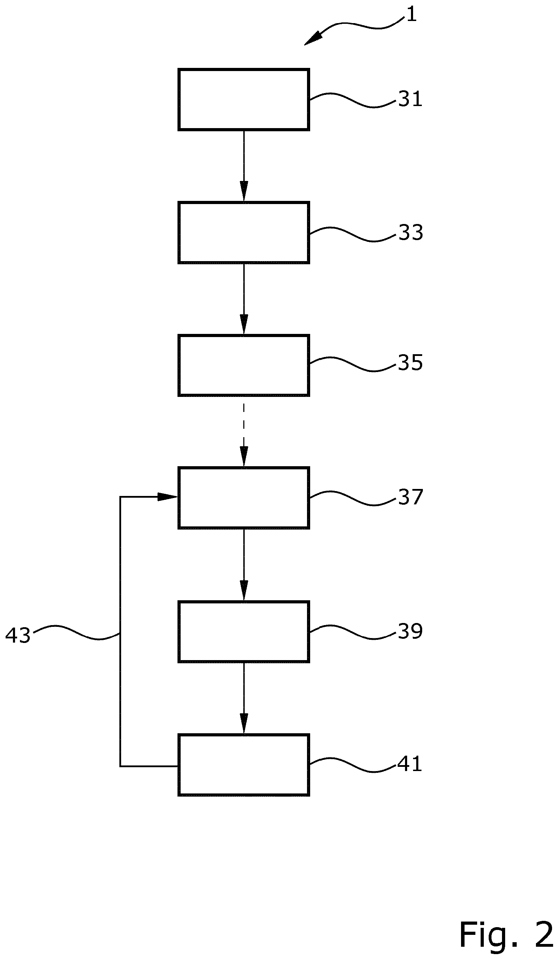

Figur 2 zeigt den Ablauf des Verfahrens 1 zur Bestimmung des Offsets des Winkellagegebers. In einem ersten Schritt 31 wird das Referenzoffset einer Referenzmaschine mit einem aus dem Stand der Technik bekanntem Verfahren bestimmt.

In einem zweiten Schritt 33 wird die Referenzmaschine gemäß einem in Figur 1 gezeigtem Aufbau auf eine Referenzdrehzahl beschleunigt und der Referenzstromwinkel in einem dritten Schritt 35 gemessen. Die so gewonnenen Werte werden beim Bestimmen des Offsets der elektrischen bzw. zu messende Maschine nachfolgend verwendet. Die Bestimmung der Referenzwerte erfolgt exemplarisch für den Referenzmotor.

Im Folgenden wird der Offset einer zu messenden Maschine gemäß dem Aufbau der Figur 1 bestimmt, wobei die zu messende Maschine anstatt des Referenzmotors angeschlossen wird. Es kann auch beispielsweise der Motor inklusive des Inverters im Vergleich zur Referenzmaschine gewechselt werden. In einem vierten Schritt 37 wird die zu messende Maschine auf die Referenzdrehzahl beschleunigt und der Stromwinkel in einem fünften Schritt 39 gemessen.

In einem sechsten Schritt 41 wird der eingestellte Stromwinkel mit dem Referenzstromwinkel verglichen. Die Abweichung entspricht dem Unterschied des Offsets der zu messenden elektrischen Maschine zum Referenzoffset der Referenzmaschine. Da dieses Referenzoffset bekannt ist, lässt sich nun das Offset der zu messenden elektrischen Maschine bestimmen.

Optional ist eine Überprüfung des bestimmten Offsets als siebter Schritt 43 möglich. Das bestimmte Offset wird als Offset der zu messenden Maschine eingestellt. Der nach Beschleunigung auf die Referenzdrehzahl anliegenden Stromwinkel ist nun im Wesentlichen identisch zum Referenzstromwinkel, ungeachtet der verschiedenen Offsets beider Maschinen.

Für die Anwendung als Serientest ist es nötig, die Schritte vier bis sechs und optional sieben bei jedem produzierten Motor zur Bestimmung des Offsets des Winkellagegebers durchzuführen. Alternative können die Schritte vier bis sechs und optional sieben bei jeder produzierten Motor und Inverter Kombination durchgeführt werden.

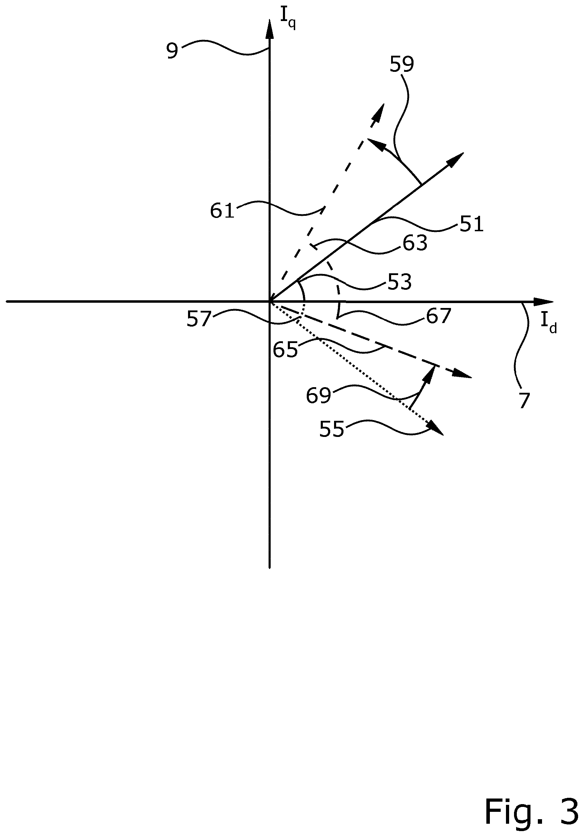

Figur 3 zeigt ein Beispiel eines Stromzeigerdiagrammes in der komplexen Ebene. Der d- Strom Id 7 ist auf der Abszissenachse und der q-Strom Iq 9 ist auf der Ordinatenachse aufgetragen.

Der durchgezogene Pfeil 51, stellt den Vektor eines Referenzstromes der elektrischen Referenzmaschine dar.

Bei der elektrischen Referenzmaschine wird der Referenzstrom 51 bei einer vorgegebenen Referenzdrehzahl eingeprägt. Der dabei anliegende Referenzstromwinkel 53 ist das Argument des Vektors 51. Da bei dieser Referenzmaschine der Winkel des Winkellagegebers durch den bekannten Referenzoffset korrekt ist, stellt der Referenzstrom einen optimalen Betrieb der Referenzmaschine sicher.

Optional kann ein weiterer Referenzstromvektor 55 (gepunktet dargestellt) bei einer zweiten Referenzdrehzahl, zum Beispiel einer negativen Drehzahl, eingeprägt werden. Das dabei entstehende zweite Argument 57 dieses zweiten Referenzstromvektors 55 kann zusätzlich als zweiter Referenzstromwinkel 57 zur genaueren Bestimmung des Offsets genutzt werden.

Bei einer zu messenden elektrischen Maschine mit unbekanntem Offset des Winkellagegebers wird ein Strom 61 bei der vorgegebenen Referenzdrehzahl eingeprägt. Der dabei anliegende Stromwinkel 63 ist das Argument des als gestrichelten Vektor 61 dargestellten Stroms. Da bei dieser zu messenden Maschine der Winkel des Winkellagegebers durch den unbekannten Offset ungenau ist, stellt der Strom keinen optimalen Betrieb der zu messenden Maschine sicher.

Optional kann ein weiterer Stromvektor 65 (langgestrichelt dargestellt) bei der zweiten Referenzdrehzahl, zum Beispiel einer negativen Drehzahl, eingeprägt werden. Das dabei entstehende zweite Argument 67 dieses zweiten Stromvektors 65 kann zusätzlich als zweiter Stromwinkel 67 zur genaueren Bestimmung des Offsets genutzt werden.

Die Differenz zwischen dem Referenzstromwinkel 53 der Referenzmaschine und dem Stromwinkel 63 der zu messenden Maschine bei der jeweils gleichen Referenzdrehzahl ergibt die Abweichung des Offsets der zu messenden Maschine vom Referenzoffset. Da das Referenzoffset der Referenzmaschine bekannt ist, kann das Offset beispielsweise als Summe aus Referenzoffset und der Differenz 59 des Strom- 63 und Referenzstromwinkels 53 bei der Referenzdrehzahl bestimmt werden.

Die gleiche Berechnung kann optional für die zweite Referenzdrehzahl erfolgen. Somit wird ein zweites Offset 69 aus der Summe des Referenzoffsets und der Differenz 69 des zweiten Strom- 67 und zweiten Referenzstromwinkels 57 bei der zweiten Referenzdrehzahl bestimmt. Das Offset kann optional durch das zweiten Offset korrigiert werden.

Die einheitliche Länge aller Vektoren zeigt, dass die Beträge aller Ströme identisch sind.

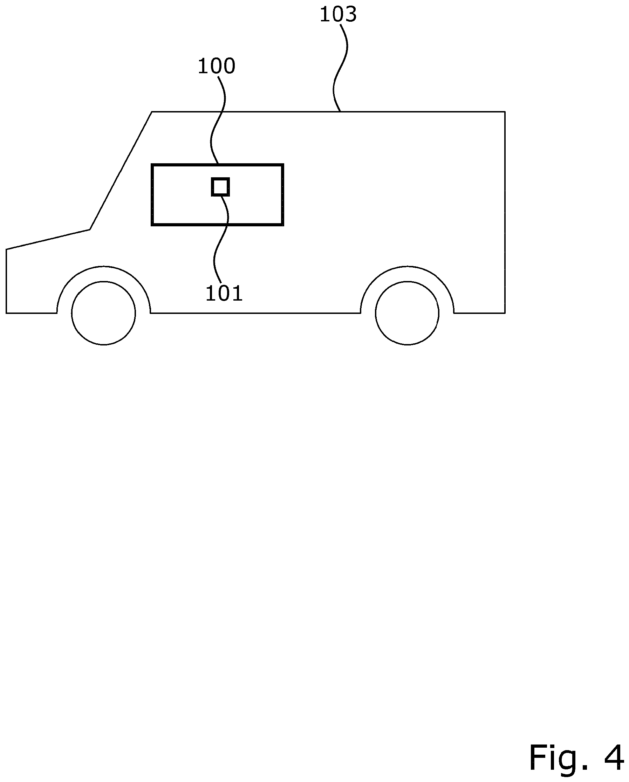

Figur 4 ist eine Prinzipskizze eines Fahrzeugs 103, beispielsweise eines Hybridfahrzeugs oder eines Elektrofahrzeugs, umfassend eine elektrische Maschine 100, insbesondere einen Elektromotor zum Antreiben des Fahrzeugs, mit einem Winkellagegeber 101, dessen Offset mittels des erfindungsgemäßen Verfahrens bestimmt wird.

## Patentansprüche

1. Verfahren (1) zum Bestimmen eines Offsets eines Winkellagegebers (101), der einem Rotor einer elektrischen Maschine (100) zugeordnet ist, wobei ein Referenzoffset eines Referenzwinkellagegebers einer elektrischen Referenzmaschine bei einer Referenzdrehzahl und einem Referenzstrom (51, 55) mit einem Referenzstromwinkel (53, 57) und einem Referenzbetrag bekannt ist, umfassend die folgenden Schritte:
- Einprägen eines Stroms (61, 65) mit dem Referenzbetrag;
- Einstellen eines Stromwinkels (63, 67) des Stroms zum Erreichen der Referenzdrehzahl;
- Vergleichen des Stromwinkels (63, 67) mit dem Referenzstromwinkel (53, 57) und dem Referenzoffset;
- Bestimmen des Offsets (59, 69) aus diesem Vergleich.

2. Verfahren (1) gemäß Anspruch 1, wobei das Offset bei zwei unterschiedlichen Referenzdrehzahlen bestimmt wird und ein Mittelwert gebildet wird.

3. Verfahren (1) gemäß Anspruch 2, wobei die Referenzdrehzahlen betragsmäßig gleich groß sind aber in unterschiedlichen Drehrichtungen liegen.

4. Verfahren (1) gemäß einem der vorherigen Ansprüche,
wobei die Referenzdrehzahl im Bereich zwischen einem Drittel und zwei Dritteln einer Motornenndrehzahl liegt.

5. Verfahren (1) gemäß einem der vorherigen Ansprüche,
wobei das Verfahren als End of Line Test einer Serienproduktion durchführbar ist.

6. System, aufweisend
- eine elektrische Maschine (21, 100) mit einem Rotor und einem Winkellagegeber (101), der dem Rotor zugeordnet ist,
- einen Inverter (19), um die elektrische Maschine (21, 100) mit einem Wechselstrom aus einer Gleichspannungsquelle zu versorgen,
- einen Drehzahlregler (29) und
- einen Stromcontroller (15), der dazu eingerichtet ist, Vorgaben für einen einzuprägenden Strom (61, 65) mit einem Stromwinkel (63, 67) und einem Strombetrag zu erhalten,
wobei der Drehzahlregler (29) dazu eingerichtet, bei einem bekannten Referenzoffset eines Referenzwinkellagegebers einer elektrischen Referenzmaschine bei einer Referenzdrehzahl und einem Referenzstrom (51, 55) mit einem Referenzstromwinkel (53, 57) und einem Referenzbetrag
- den Referenzbetrag als Strombetrag des einzuprägenden Stroms (61, 65) vorzugeben;
- den Stromwinkel (63, 67) des Stroms zum Erreichen der Referenzdrehzahl einzustellen;
- den Stromwinkel (63, 67) mit dem Referenzstromwinkel (53, 57) und dem Referenzoffset zu vergleichen; und
- einen Offset (59, 69) des Winkellagegebers (101) aus diesem Vergleich zu bestimmen.

7. System nach Anspruch 6, ferner umfassend einen Pulsweitenmodulator (17), der dazu eingerichtet ist, Schaltelemente im Inverter (19) zu schalten, um die elektrische Maschine (21, 100) mit der Wechselspannung aus der Gleichspannungsquelle zu versorgen, wobei der Stromcontroller (15) dazu eingerichtet ist, dem Pulsweitenmodulator (17) vorzugeben, welches Tastverhältnis der Inverter (19) einstellen soll.

## Claims

1. Method (1) for determining an offset of an angular position encoder (101) assigned to a rotor of an electric machine (100), wherein a reference offset of a reference angular position encoder of a reference electric machine is known in conjunction with a reference rotational speed and a reference current (51, 55) with a reference current angle (53, 57) and a reference amount, comprising the following steps:
- impressing a current (61, 65) having the reference amount;
- setting a current angle (63, 67) of the current in order to achieve the reference rotational speed;
- comparing the current angle (63, 67) with the reference current angle (53, 57) and the reference offset;
- determining the offset (59, 69) from this comparison.

2. Method (1) according to Claim 1, wherein the offset is determined for two different reference rotational speeds and serves to calculate the mean value.

3. Method (1) according to Claim 2, wherein the reference rotational speeds have the same absolute value, but are in different rotation directions.

4. Method (1) according to any of the preceding claims, wherein the reference rotational speed lies in the range between one third and two thirds of a nominal motor speed.

5. Method (1) according to any of the preceding claims, wherein the method is applicable as an end-of-line test of series production.

6. System, comprising:
- an electric machine (21, 100) having a rotor and an angular position encoder (101) assigned to the rotor,
- an inverter (19) in order to supply the electric machine (21, 100) with an AC current from a DC voltage source,
- a rotational speed controller (29) and
- a current controller (15) configured to obtain predefined values for a current (61, 65) to be impressed, having a current angle (63, 67) and a current amount,
wherein the rotational speed controller (29) is configured, in the case of a known reference offset of a reference angular position encoder of a reference electric machine in conjunction with a reference rotational speed and a reference current (51, 55) with a reference current angle (53, 57) and a reference amount,
- to predefine the reference amount as current value of the current (61, 65) to be impressed;
- to set the current angle (63, 67) of the current in order to achieve the reference rotational speed;
- to compare the current angle (63, 67) with the reference current angle (53, 57) and the reference offset; and
- to determine an offset (59, 69) of the angular position encoder (101) from this comparison.

7. System according to Claim 6, furthermore comprising a pulse width modulator (17) configured to switch switching elements in the inverter (19) in order to supply the electric machine (21, 100) with the AC voltage from the DC voltage source, wherein the current controller (15) is configured to predefine for the pulse width modulator (17) what duty cycle the inverter (19) is intended to set.

## Revendications

1. Procédé (1) de détermination d'un décalage d'un capteur de position angulaire (101) associé à un rotor d'une machine électrique (100), dans lequel un décalage de référence d'un capteur de position angulaire de référence d'une machine électrique de référence est connu pour une vitesse de rotation de référence et un courant de référence (51, 55) avec un angle de courant de référence (53, 57) et une valeur de référence, comprenant les étapes suivantes :
- l'injection d'un courant (61, 65) ayant la valeur de référence ;
- le réglage d'un angle de courant (63, 67) du courant afin d'atteindre la vitesse de rotation de référence ;
- la comparaison de l'angle de courant (63, 67) à l'angle de courant de référence (53, 57) et au décalage de référence ;
- la détermination du décalage (59, 69) à partir de ladite comparaison.

2. Procédé (1) selon la revendication 1, dans lequel le décalage est déterminé pour deux vitesses de rotation de référence différentes et une valeur moyenne est calculée.

3. Procédé (1) selon la revendication 2, dans lequel les vitesses de rotation de référence sont égales en valeur absolue mais présentent des sens de rotation différents.

4. Procédé (1) selon l'une des revendications précédentes, dans lequel la vitesse de rotation de référence se situe dans la plage comprise entre un tiers et deux tiers d'une vitesse de rotation nominale du moteur.

5. Procédé (1) selon l'une des revendications précédentes, dans lequel le procédé peut être mis en œuvre en tant que test de fin de ligne d'une production en série.

6. Système comportant
- une machine électrique (21, 100) dotée d'un rotor et d'un capteur de position angulaire (101) associé au rotor,
- un onduleur (19) destiné à alimenter la machine électrique (21, 100) en tension alternative à partir d'une source de tension continue,
- un régulateur de vitesse de rotation (29) et
- un contrôleur de courant (15) conçu pour obtenir des valeurs de consigne pour un courant (61, 65) à injecter avec un angle de courant (63, 67) et une valeur de courant,
dans lequel le régulateur de vitesse de rotation (29) est conçu, dans le cas d'un décalage de référence connu d'un capteur de position angulaire de référence d'une machine électrique de référence, pour une vitesse de rotation de référence et un courant de référence (51, 55) avec un angle de courant de référence (53, 57) et une valeur de référence, pour
- prédéfinir la valeur de référence en tant que valeur de courant du courant à injecter (61, 65) ;
- régler l'angle de courant (63, 67) du courant afin d'atteindre la vitesse de rotation de référence ;
- comparer l'angle de courant (63, 67) à l'angle de courant de référence (53, 57) et au décalage de référence ; et
- déterminer un décalage (59, 69) du capteur de position angulaire (101) à partir de ladite comparaison.

7. Système selon la revendication 6, comprenant en outre un modulateur de largeur d'impulsion (17) conçu pour commuter des éléments de commutation dans l'onduleur (19) afin d'alimenter la machine électrique (21, 100) en tension alternative à partir de la source de tension continue, dans lequel le contrôleur de courant (15) est conçu pour indiquer au modulateur de largeur d'impulsion (17) le rapport cyclique que doit régler l'onduleur (19).
